# EUROPEAN PATENT APPLICATION

(11) **EP 3 806 088 A1**
(43) Date of publication of application: **14.04.2021**
(21) Application number: 20190691.4
(22) Date of filing: 12.08.2020
(51) Int. Cl.: G10L 13/027, G06F 3/16, G10L 13/033

(54) **VOICE ASSISTANT WITH CONTEXTUALLY-ADJUSTED AUDIO OUTPUT**

(30) Priority: 08.10.2019 US 201916596756
(71) Applicant: Spotify AB, 111 53 Stockholm (SE)
(72) Inventor: MENNICKEN, Sarah, 111 53 Stockholm (SE); MOULTON, Paul, 111 53 Stockholm (SE); KUMAR, Rohit, 111 53 Stockholm (SE); STECKEL, Mira, 111 53 Stockholm (SE); CRAMER, Henriette, 111 53 Stockholm (SE); LE LAY, François, 111 53 Stockholm (SE)
(74) Representative: Kransell & Wennborg KB

(57) **Abstract**

The invention relates to generating synthesized speech of a voice assistant (112) having a contextually-adjusted audio output (235) using a voice-enabled device.

## Description

### BACKGROUND

Virtual assistants are sometimes used to assist human users in interacting with computerized devices. Virtual assistants that are able to understand human speech and/or respond using a synthesized voice are referred to as voice assistants.

A company can develop a voice assistant that interacts with the company's customers. The developers of the voice assistant make many decisions to define the audio output generated by the voice assistant to make the audio output suitable for the brand . The decisions can include, for example, the sound of the voice, the vocabulary used, and even factors such as whether the voice assistant will use humor in its communication. Sometimes a company will generate several brand personalities, such as having male and female voices, and perhaps having different accents. A user may be able to select between the several available brand personalities.

But once the brand audio output is developed and selected by a user, that one selected brand audio output is then used for all subsequent interactions with the user.

### SUMMARY

In general terms, this disclosure relates to a voice assistant. In some embodiments and by non-limiting example, the voice assistant has a contextually-adjusted audio output. As one example, the audio output is adjusted based on identified media content characteristics, to provide a voice assistant audio output that is compatible with the media content characteristics.

One aspect is a method for generating synthesized speech of a voice assistant having a contextually-adjusted audio output using a voice-enabled device, the method comprising: identifying media content characteristics associated with media content; identifying base characteristics of audio output; generating contextually-adjusted characteristics of audio output based at least in part on the base characteristics and the media content characteristics; and using the contextually-adjusted audio output characteristics to generate the synthesized speech.

Another aspect is a voice assistant system comprising: at least one processing device; and at least one computer readable storage device storing data instructions that, when executed by the at least one processing device, cause the at least one processing device to: identify media content characteristics associated with media content; identify base characteristics of audio output; generate contextually-adjusted audio output characteristics based at least in part on the base characteristics of audio output and the media content characteristics; and use the contextually-adjusted audio output characteristics to generate synthesized speech.

### BRIEF DESCRIPTION OF THE DRAWINGS

FIG. 1 is a schematic block diagram illustrating an example of a media playback system including a voice assistant.
FIG. 2 is a schematic block diagram illustrating another example of the media playback system shown in FIG. 1.
FIG. 3 is a schematic block diagram illustrating an example of the voice assistant shown in FIG. 1.
FIG. 4 is a schematic block diagram illustrating an example of a contextual audio output adjuster of the voice assistant shown in FIG. 3
FIG. 5 is a schematic block diagram illustrating an example of a media content analysis engine of the contextual audio output adjuster shown in FIG. 4.
FIG. 6 is a schematic block diagram illustrating an example of a voice action library of a content selector of the voice assistant shown in FIG. 3
FIG. 7 is a schematic block diagram of an example library of words and phrases of a natural language generator of the voice assistant shown in FIG. 3.

### DETAILED DESCRIPTION

Various embodiments will be described in detail with reference to the drawings, wherein like reference numerals represent like parts and assemblies throughout the several views. Reference to various embodiments does not limit the scope of the claims attached hereto. Additionally, any examples set forth in this specification are not intended to be limiting and merely set forth some of the many possible embodiments for the appended claims.

When a single voice assistant is provided for interacting with users of a particular system, the audio output characteristics of the voice assistant may not be appropriate for all situations. As an example, a media playback system can have a voice assistant that introduces music to be played, and responds to user-interface navigation commands by the user. When the user is listening to uptempo music in a major key, a voice assistant with similar characteristics of audio output is appropriate, but those same characteristics of audio output are unlikely to be appropriate when the user is listening to slower tempo music in a minor key. Similarly, a voice assistant with a British accent may contrast with the music when a user is listening to American country music. Further, audio output characteristics resulting in a deep voice and a slow rate of speech may be desirable when listening to calm relaxing music, but may not be appropriate for fast-paced high-energy dance music.

Accordingly, the present disclosure describes a voice assistant with a contextually-adjusted audio output. The audio output characteristics can be adjusted based on a context in which the voice assistant is used, such as based on characteristics of media content played by the system. In this way, the audio output characteristics of the voice assistant can be selected to be appropriate for the context.

The present disclosure describes the use of a voice assistant in the context of a media playback system, which operates to play media content to a user U. However, the principles, systems, and methods described herein can also be applied to other systems. Therefore, the media playback system is just one possible example of a system in which the principles, systems, and methods described herein can be implemented.

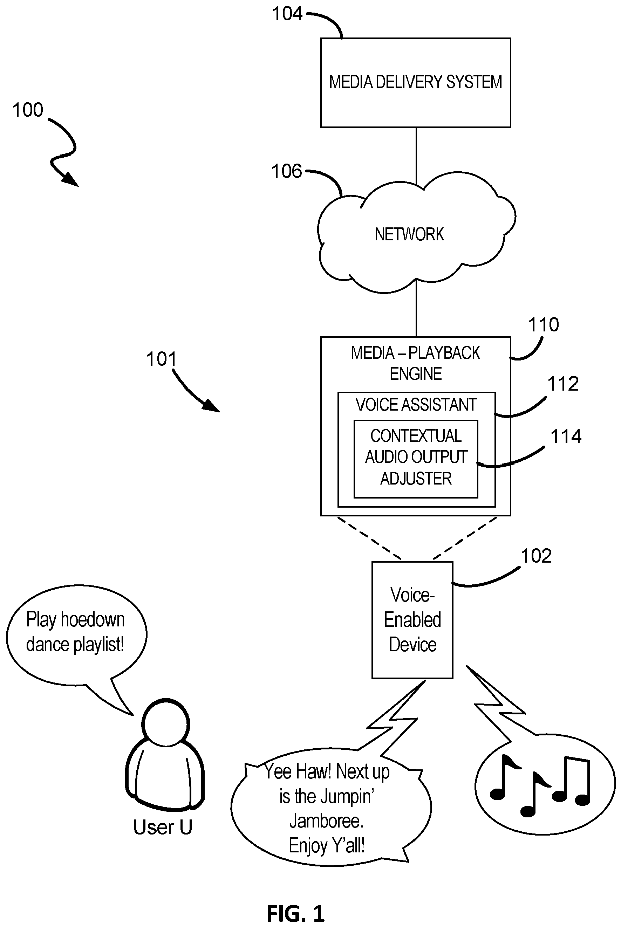

FIG. 1 is a schematic block diagram illustrating an example of a media playback system 100 including a voice assistant system 101. In this example, the media playback system 100 includes a voice-enabled device 102 and a media delivery system 104. The voice-enabled device 102 and media delivery system 104 communicate with each other across a data communication network 106. The example voice-enabled device 102 includes a media-playback engine 110 that includes a voice assistant 112. The example voice assistant 112 includes a contextual audio output adjuster 114. A user U is also shown.

In the illustrated example, the user U interacts with the voice assistant 112 by requesting playback of media content. In this example, the user U audibly requests that the media playback system 100 "play hoedown dance play list."

The media playback system 100 processes the user's utterance, finds a hoedown dance playlist, and begins playback of the requested media content.

However, in this example, before the playback begins, the voice assistant provides an audible response to the user confirming receipt of the request, and informing the user of the first song that will be played. Before doing so, the contextual audio output adjuster 114 operates to determine characteristics of the media content to be played, and adjusts the voice assistant 112 audio output characteristics to provide a contextually-adjusted audio output that is appropriate for the context of playing hoedown dance music. For example, the voice assistant 112 replies with "Yee haw! Next up is the Jumpin' Jamboree. Enjoy Y'all!" The media playback system 100 then proceeds with playback of the Jumpin' Jamboree song of the hoedown dance music playlist requested by the user U.

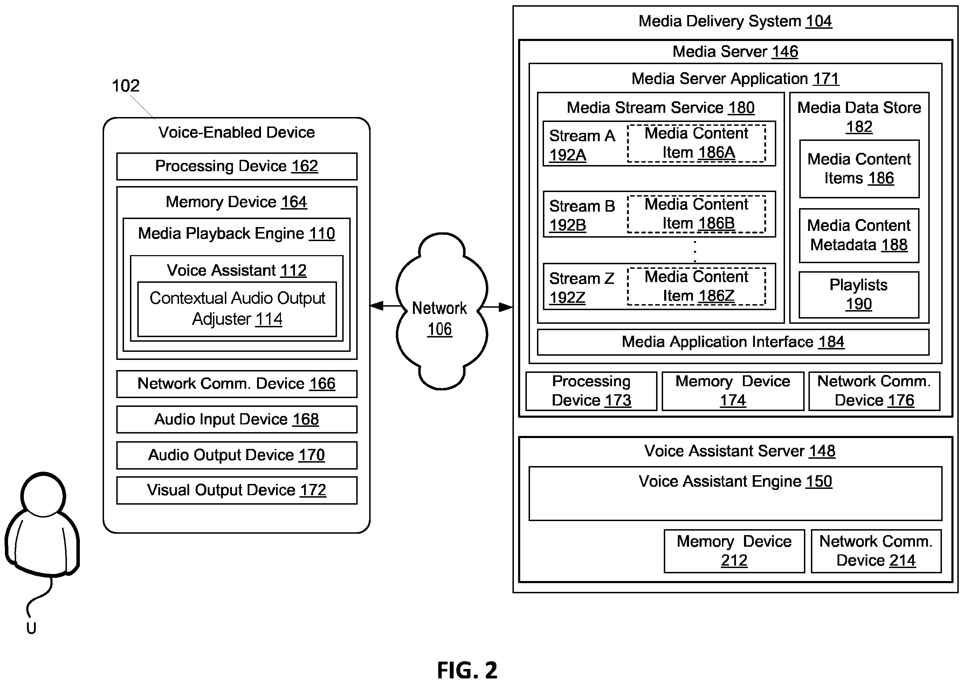

The voice-enabled device 102 is a computing device used by a user, such as the user U. In some embodiments the voice-enabled device 102 is configured for interaction with a user via voice. An example of a voice-enabled device 102 is illustrated and described in more detail with reference to FIG. 2.

In this example, the voice-enabled device 102 includes a media-playback engine 110. The media-playback engine 110 can be, for example, a software application running on the voice-enabled device 102 that plays media content for the user U. In some embodiments the media content is obtained from a media delivery system 104, such as by streaming the media content from the media delivery system 104 to the media-playback engine 110 on the voice-enabled device 102. Locally stored media content can also be used in other embodiments, and communication with the media delivery system 104 is not required in all embodiments.

The media delivery system 104 is a system that provides media content to the voice-enabled device 102. In one example, the media delivery system 104 is a media streaming service that streams media content across the Internet (network 106) to the voice-enabled device 102 for playback to the user U.

The network 106 is one or more data communication networks that individually or collectively provide a data communication channel between the voice-enabled device 102 and the media delivery system 104. An example of the network 106 is the Internet. The network 106 can include wired and wireless data communication channels, such as cellular, WIFI, BLUETOOTH™, LoRa, wired, and fiber optic communication channels.

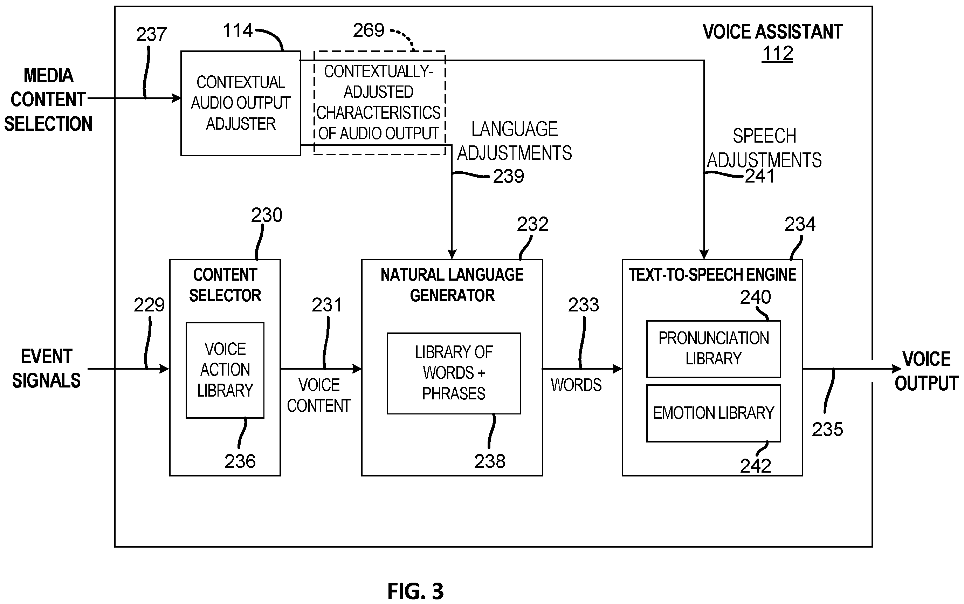

The voice assistant 112 is provided by the voice-enabled device 102 and operates to speak to the user U using a synthesized voice. The voice assistant can provide a variety of useful operations, including to confirm that a user command has been received, informing the user of actions that are being taken by the media playback system, and providing help and assistance to the user. An example of the voice assistant 112 is illustrated and described in further detail with reference to FIG. 3.

In some embodiments the voice assistant 112 includes a contextual audio output adjuster 114 that operates to adjust the audio output characteristics of the voice assistant 112 so that it is appropriate to the context. The contextual audio output adjuster is described in more detail herein, such as with reference to FIGS. 3-4.

In some embodiments, the example voice assistant system 101 includes at least the voice-enabled device 102. In other embodiments, the voice assistant system 101 includes one or more other devices. For example, in some embodiments the voice assistant system 101 includes the voice-enabled device 102 and at least portions of the media delivery system 104 (such as the voice assistant server 148, shown in FIG. 2).

FIG. 2 is a schematic block diagram illustrating another example of the media playback system 100, shown in FIG. 1. In this example, the media playback system 100 includes the voice-enabled device 102 and the media delivery system 104. The network 106 is also shown for communication between the voice-enabled device 102 and the media delivery system 104.

As described herein, the voice-enabled device 102 operates to play media content items to a user U and provides a voice assistant 112 that assists the user in interactions with the voice-enabled device 102. In some embodiments, the voice-enabled device 102 operates to play media content items 186 that are provided (e.g., streamed, transmitted, etc.) by a system remote from the voice-enabled device 102 such as the media delivery system 104, another system, or a peer device. Alternatively, in some embodiments, the voice-enabled device 102 operates to play media content items stored locally on the voice-enabled device 102. Further, in at least some embodiments, the voice-enabled device 102 operates to play media content items that are stored locally as well as media content items provided by remote systems.

The voice-enabled device 102 is a computing device that includes a voice assistant 112 that can interact with a user using a synthesized voice. In some embodiments the voice assistant 112 can also receive and respond to voice input from the user U. Examples of the voice-enabled device 102 include a smartphone, a smart speaker (e.g., a Google Home smart speaker, an Amazon Echo device, an automated telephone system (such as an answering service)), a computer (e.g., desktop, laptop, tablet, etc.). In some embodiments, the voice-enabled device 102 includes a processing device 162, a memory device 164, a network communication device 166, an audio input device 168, and audio output device 170, and a visual output device 172. In the illustrated example, the memory device 164 includes the media-playback engine 110, the voice assistant 112, and a contextual audio output adjuster 114. Other embodiments of the voice-enabled device include additional, fewer, or different components.

In some embodiments, the processing device 162 comprises one or more processing devices, such as central processing units (CPU). In other embodiments, the processing device 162 additionally or alternatively includes one or more digital signal processors, field-programmable gate arrays, or other electronic circuits. In some embodiments the processing device 162 includes at least one processing device that can execute program instructions to cause the at least one processing device to perform one or more functions, methods, or steps as described herein.

The memory device 164 operates to store data and program instructions. In some embodiments, the memory device 164 stores program instructions for the media-playback engine 110 that enables playback of media content items received from the media delivery system 104, and for the voice assistant 112. As described herein, the media-playback engine 110 is configured to communicate with the media delivery system 104 to receive one or more media content items (e.g., through the media content streams 192 (including media content streams 192A, 192B, 192Z).

The memory device 164 includes at least one memory device. The memory device 164 typically includes at least some form of computer-readable media. Computer readable media include any available media that can be accessed by the voice-enabled device 102. By way of example, computer-readable media can include computer readable storage media and computer readable communication media.

Computer readable storage media includes volatile and nonvolatile, removable and non-removable media implemented in any device configured to store information such as computer readable instructions, data structures, program modules, or other data. Computer readable storage media includes, but is not limited to, random access memory, read only memory, electrically erasable programmable read only memory, flash memory and other memory technology, compact disc read only memory, blue ray discs, digital versatile discs or other optical storage, magnetic cassettes, magnetic tape, magnetic disk storage or other magnetic storage devices, or any other medium that can be used to store the data and program instructions and that can be accessed by the voice-enabled device 102. In some embodiments, computer readable storage media is non-transitory computer readable storage media.

Computer readable communication media typically embodies computer readable instructions, data structures, program modules or other data in a modulated data signal such as a carrier wave or other transport mechanism and includes any information delivery media. The term "modulated data signal" refers to a signal that has one or more of its characteristics set or changed in such a manner as to encode information in the signal. By way of example, computer readable communication media includes wired media such as a wired network or direct-wired connection, and wireless media such as acoustic, radio frequency, infrared, and other wireless media. Combinations of any of the above are also included within the scope of computer readable media.

The network communication device 166 is device that operates to communicate data across the network 106. The network communication device 166 allows the voice-enabled device 102 to communication with remote devices, such as with the media server 146 and the voice assistant server 148 of the media delivery system 104. Examples of the network communication device 166 include wired and wireless data communication devices, such as a cellular, WIFI, BLUETOOTH™, LoRa, and wired (e.g., Ethernet) communication device.

Some embodiments include an audio input device 168 that operates to receive audio input, such as voice input provided by the user. The audio input device 168 typically includes at least one microphone. In some embodiments the audio input device 168 detects audio signals directly, and in other embodiments the audio input device 168 communicates with another device that detects the audio signals (such as through a Bluetooth-connected microphone).

The audio output device 170 operates to output audible sounds, such as the media content, the synthesized voice of the voice assistant 112, and other audio outputs, such as audio cues. In some embodiments, the audio output device 170 generates media output to play media content to the user U. Examples of the audio output device 170 include a speaker, an audio output jack, and a Bluetooth transceiver (such as for communication with a Bluetooth-connected speaker). In some embodiments the audio output device 170 generates an audio output directly, and in other embodiments the audio output device 170 communicates with another device that generates the audio output. For example, the audio output device 170 may transmit a signal through an audio output jack or a Bluetooth transmitter that can be used to generate the audio signal by a connected or paired device such as headphones or a speaker.

Some embodiments also include a visual output device 172. The visual output device 172 includes one or more light-emitting devices that generate a visual output. Examples of the visual output device 172 includes a display device (which can include a touch-sensitive display device) and lights such as one-or-more light-emitting diodes (LEDs).

With still reference to FIG. 2, the media delivery system 104 includes one or more computing devices, such as the media server 146 that provides media content items 186 to the voice-enabled device 102, and the voice assistant server 148 that performs one or more voice assistant operations to support the voice assistant 112. Each of the media server 146 and voice assistant server 148 can include multiple computing devices in some embodiments.

In some embodiments, the media delivery system 104 operates to transmit stream media 192 to one or more media playback devices such as the voice-enabled device 102.

In this example, the media server 146 comprises a media server application 171, a processing device 173, a memory device 174, and a network communication device 176. The processing device 173, memory device 174, and network communication device 176 may be similar to the processing device 162, memory device 164, and network communication device 166 respectively, which have each been previously described.

In some embodiments, the media server application 171 operates to stream music or other audio, video, or other forms of media content. The media server application 171 includes a media stream service 180, a media data store 182, and a media application interface 184.

The media stream service 180 operates to buffer media content such as media content items 186 (including 186 A, 186B, and 186Z) for streaming to one or more streams 192 (including streams 192A, 192B, and 192Z).

The media application interface 184 can receive requests or other communication from media playback devices (such as voice-enabled device 102) or other systems, to retrieve media content items from the media delivery system 104. For example, in FIG. 2, the media application interface 184 receives communications from the media-playback engine 110 of the voice-enabled device 102.

In some embodiments, the media data store 182 stores media content items 186, media content metadata 188, and playlists 190. The media data store 182 may comprise one or more databases and file systems. Other embodiments are possible as well. As noted above, the media content items 186 may be audio, video, or any other type of media content, which may be stored in any format for storing media content.

The media content metadata 188 operates to provide information associated with the media content items 186. In some embodiments, the media content metadata 188 includes one or more of title, artist, lyrics, album name, length, genre, mood, era, or other media metadata, such as described herein.

The play lists 190 operate to identify one or more of the media content items 186. In some embodiments, the playlists 190 identify a group of the media content items 186 in a particular order. In other embodiments, the playlists 190 merely identify a group of the media content items 186 without specifying a particular order. Some, but not necessarily all, of the media content items 186 included in a particular one of the playlists 190 are associated with a common characteristic such as a common genre, mood, or era.

In this example, the voice assistant server 148 includes the voice assistant engine 150, the processing device 210, the memory device 174, and the network communication device 176.

Some embodiments of the media playback system 100 do not include a voice assistant server 148 and voice assistant engine 150. In other embodiments, any one or more of the functions, methods, and operations described herein as being performed by the voice assistant 112 can alternatively be performed by one or more computing devices of the voice assistant server 148 and one or more voice assistant engine 150. Further, in some embodiments the voice assistant server 148 performs operations to retrieve media content items 186, media content metadata 188, and playlists 190, and in some embodiments operates to analyze same.

The voice assistant engine 150 can operate on a single computing device, or by cooperation of multiple computing devices. For example, the voice assistant 112 can operate solely on the voice-enabled device 102, as shown. Alternatively, portions of the voice assistant 112 can be performed by one or more other computing devices, such as by data communication between the voice-enabled device 102 and the media delivery system 104. In the example shown in FIG. 2, the media delivery system 104 includes a voice assistant server 148 that includes a voice assistant engine 150. The voice assistant engine 150 can perform any one or more of the operations of the voice assistant 112 described herein, such as with reference to FIGS. 3 (e.g., any part or all of the contextual audio output adjuster 114, natural language generator 232, and text-to-speech engine 234).

The processing device 210, memory device 212, and network communication device 214 may be similar to the processing device 162, memory device 164, and network communication device 166 respectively, which have each been previously described.

In various embodiments, the network 106 includes one or more data communication links, which may include multiple different types. For example, the network 106 can include wired and/or wireless links, including Bluetooth, ultra-wideband (UWB), 802.11, ZigBee, cellular, LoRa, and other types of wireless links. Furthermore, in various embodiments, the network 106 is implemented at various scales. For example, the network 106 can be implemented as one or more local area networks (LANs), metropolitan area networks, subnets, wide area networks (such as the Internet), or can be implemented at another scale. Further, in some embodiments, the network 106 includes multiple networks, which may be of the same type or of multiple different types.

Although FIG. 2 illustrates only a single voice-enabled device 102 in communication with a single media delivery system 144, in accordance with some embodiments, the media delivery system 104 can support the simultaneous use of multiple voice-enabled devices. Additionally, the voice-enabled device 102 can simultaneously access media content from multiple media delivery systems.

FIG. 3 is a schematic block diagram illustrating an example of the voice assistant 112, shown in FIGS. 1 and 2.

As discussed herein, the voice assistant 112 can be part of the voice-enabled device 102, or portions of the voice assistant 112 can be implemented on one or more other computing devices, such as by the voice assistant engine 150 of the voice assistant server 148.

In this example, the voice assistant 112 includes the contextual audio output adjuster 114, a content selector 230, a natural language generator 232, and a text-to-speech engine 234. The example content selector includes a voice action library 236. The example natural language generator, includes a library of phrases 238. The example text-to-speech engine 234 includes a pronunciation library and an emotion library 242.

The voice assistant 112 operates to communicate with the user U by generating an audible voice output 235. To do so, the voice assistant 112 receives event signals 229 from the media-playback engine 110, and the voice assistant 112 determines when it is appropriate to generate a voice output 235 based on the event signals 229. The voice output 235 is also adjusted to be contextually appropriate, such as based on a media content selection 237.

The contextual audio output adjuster 114 operates to determine a context in which a voice output 235 is to be generated, and to generate contextually-adjusted characteristics of audio output 269 that are appropriate for the context. In this example shown in FIG. 3, the contextual audio output adjuster receives an identification of a media content selection 237. The media content selection 237 is, for example, a currently selected media content item that is selected for playback. The media content can be one or more media content items (e.g., song, video, podcast, etc.), playlists, media content queues, or other media content. In another possible embodiment, the input received by the contextual audio output adjuster 114 can be an identification of media content characteristics associated with the selected media content.

The contextual audio output adjuster 114 determines a context for the voice output 235, such as based at least in part on the media content selection 237, and generates contextually-adjusted characteristics of audio output 269. In some embodiments, the contextually-adjusted audio output 269 is communicated from the contextual audio output adjuster 114 to one or more of the natural language generator 232 and the text-to-speech engine 234, which use the contextually-adjusted characteristics of audio output 269 to generate synthesized speech as a voice output 235. In some embodiments the contextually-adjusted characteristics of audio output 269 include one or more of language adjustments 239 provided to the natural language generator 232 and speech adjustments 241 provided to the text-to-speech engine 234.

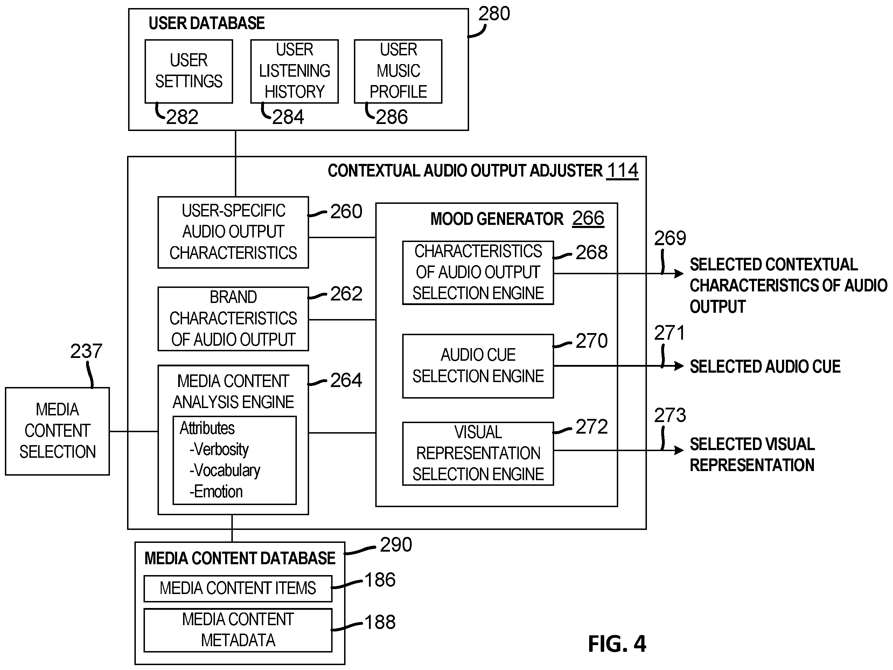

An example of the contextual audio output adjuster 114 is illustrated and described in more detail with reference to FIG. 4.

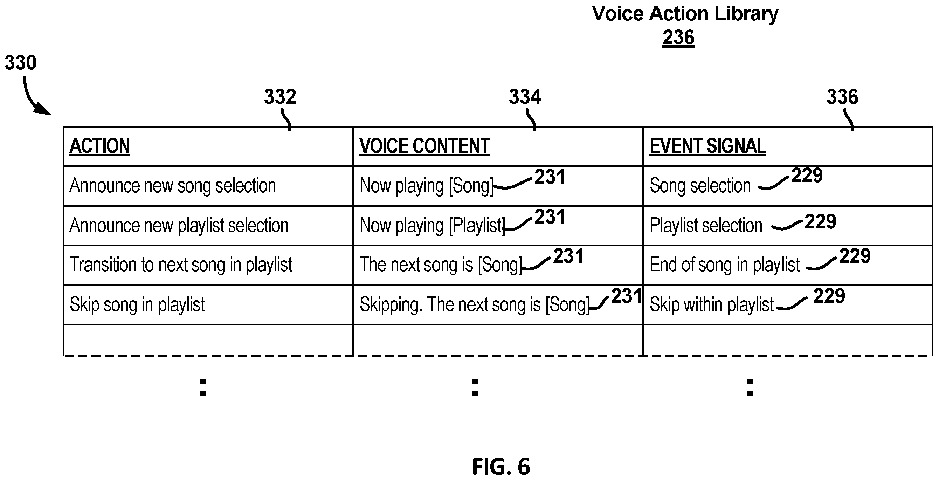

The content selector 230 operates to determine voice content to be communicated to the user U, such as based upon the event signals 229. In some embodiments, the content selector 230 includes a voice action library 236 that identifies the set of actions that can be taken by the voice assistant 112 in response to event signals 229. For example, if the media-playback engine 110 receives a request from a user to play a particular playlist, content selector 230 identifies an action associated with the playback request, such as a voice output confirming the receipt of the request and indicating that playback of the playlist is about to begin. As another example, the voice assistant 112 can be configured to announce information about the media content, such as the artist or title of a song, before or after playing the media content. In this example, the transition between songs is an event signal 229 that is associated with a transitional announcement in the voice action library 236, such as to announce information about a song that is about to begin playing. An example of the voice action library 236 is illustrated and described in further detail with reference to FIG. 6.

There may be multiple actions that can be taken by the voice assistant 112 in response to one or more event signals 229 being received, and the content selector 230 is programmed to select one of those actions to identify appropriate voice content 231 responsive to the one or more event signals 229. In some embodiments, the content selector 230 can also access other information to help it select appropriate voice content. The other information can include the media content selection 237, media content metadata containing a vast database of information about the media content (including musical characteristics of the media content, biographical information about the one or more artists, lyrics, historical information (e.g., year of release), stories about the media content or one or more artists, and the like), weather information, traffic information, location information, news, or other information.

The natural language generator 232 operates to select the specific words 233 to be contained in the voice output 235. In this example, the natural language generator 232 includes a library of words and phrases 238 that identifies all possible words and phrases that can be spoken by the voice assistant 112. The natural language generator 232 receives an identification of the voice content 231 from the content selector 230, and then determines what words 233 should be spoken by the voice assistant to convey the voice content 231. For example, if the voice content is "the next song is [song]" there may be many possible ways that the voice assistant 112 can inform the user what song is going to be played next. The words 233 selected could be as simple as saying the name or artist of the next song, or as complex as telling an elaborate story about the song or artist.

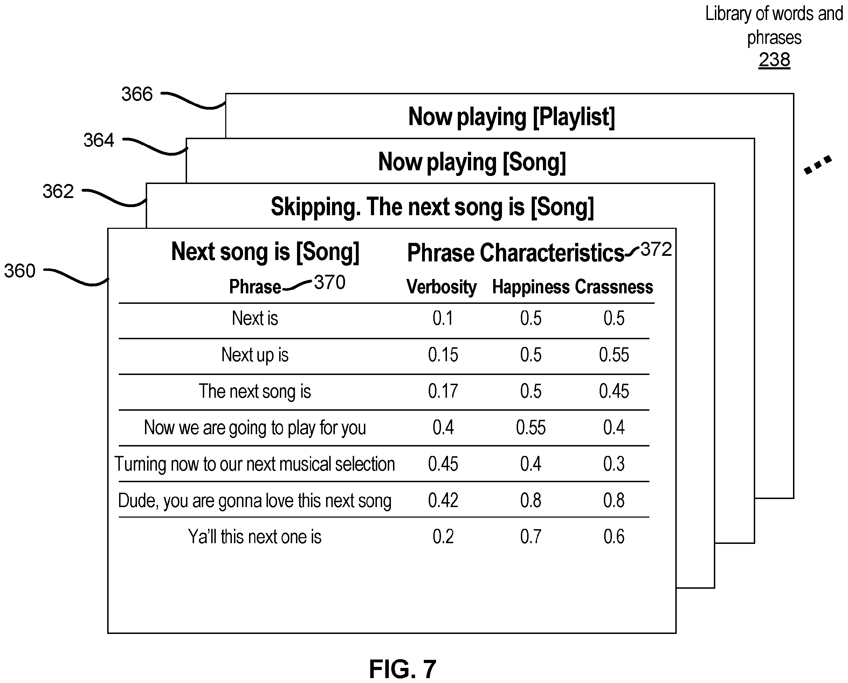

In some embodiments, the selection of the words 233 from the library of words and phrases 238 is based at least in part upon contextually-adjusted characteristics of audio output 269 identified by the contextual audio output adjuster 114. In some embodiments, the contextually-adjusted characteristics of audio output 269 are provided to the natural language generator as language adjustments 239. The language adjustments 239 identify characteristics of the contextually-adjusted characteristics of audio output 269 that can be used by the natural language generator 232 to select appropriate words 233 to use to convey the voice content 231 according to the contextually-adjusted characteristics of audio output 269. An example of the library of words and phrases 238 is illustrated and described in further detail herein with reference to FIG. 7.

In some embodiments, the language adjustments 239 define characteristics of the contextually-adjusted characteristics of audio output 269. Examples of the audio output characteristics include a verbosity, happiness, crassness, tempo, pitch, and excitement. Many other possible characteristics can be identified. In some embodiments the characteristics are communicated as scores in the language adjustments 239. For example, the scores can be on a scale from 0 to 1. A verbosity score of 0 would indicate that the contextually-adjusted characteristics of audio output 269 prefers few words, whereas a verbosity score of 1 would indicate that the contextually-adjusted characteristics of audio output 269 prefers to use many words to convey the voice content 231. Similar scores can be generated by the contextual audio output adjuster 114 for use by the natural language generator 232 in selecting words 233.

The natural language generator 232 can also use other information to select words 233. For example, the natural language generator 232 can identify the media content selection 237 and metadata associated with the media content. Relationships between certain media content and media content metadata can be identified in the library of words and phrases 238. For example, a phrase that contains the terms "yee haw" might be highly correlated to a country genre of music, and therefore the natural language generator 232 can identify the genre of the music content selection to assist in determining whether the use of that phrase is suitable for the context. In other words, the library of words and phrases can contain a genre score that indicates an appropriateness of the use of the phrase for a particular genre of music, and the natural language generator can utilize the score and the genre of the media content selection 237 in its selection of words 233.

Examples of natural language generators that can perform at least portions of the functions of the text-to-speech engine 234 include natural language generators such as those provided by Amazon™ for Alexa, Google™ Home, Yahoo™, personality, Microsoft® for Cortana.

The text-to-speech engine 234 operates to generate synthesized speech for the voice output 235, including determining a pronunciation of the words 233, and an emotion for the expression of those words 233. In the illustrated example, the text-to-speech engine includes a pronunciation library 240 and an emotion library 242. The pronunciation library 240 identifies all possible ways of pronouncing the words 233, and the emotion library 242 identifies the different emotions that can be applied to the expression of the words 233.

In some embodiments the text-to-speech engine 234 determines the pronunciation of the words 233 based on pronunciation rules defined in the pronunciation library.

In some embodiments the text-to-speech engine 234 determines the pronunciation of words based at least in part on the audio output characteristics (speech adjustments 241) for the contextually-adjusted characteristics of audio output 269. For example, the speech adjustments 241 can identify a particular accent that the voice assistant 112 should use when speaking, and therefore the text-to-speech engine 234 uses the speech adjustments 241 to select a pronunciation from the pronunciation library that includes the accent. In some embodiments the pronunciation of words is changed based on a language or language style. As one example, English words can be spoken using an American English accent, or can be spoken using a Latin American or Spanish accent, or with accents of different parts of a country (e.g., eastern or southern United States accents) or of different parts of the world. Pronunciation can also be adjusted to convey emotions such as angry, polite, happy, sad, etc.

In some embodiments the text-to-speech engine 234 also identifies an emotion to apply to the expression of the words 233, using the emotion library 242. As a simple example, emotions of calm or sadness can be expressed by a slower rate of speech and a lower pitch, whereas excitement and happiness can be expressed by a faster rate of speech and a higher pitch. The emotion library 242 stores speech modifications for a plurality of possible emotions. The text-to-speech engine receives an identification of an appropriate emotion from the contextual audio output adjuster (such as through the speech adjustments 241), and then defines the expression of the words to convey the emotion using the speech modifications from the emotion library 242.

In some embodiments the text-to-speech engine 234 utilizes a markup language to annotate the words 233 for the generation of synthetic speech, such as to identify the desired pronunciation of the words 233 and/or the emotions to express when speaking the words 233. An example of the markup language is the Speech Synthesis Markup Language (SSML), a recommendation of the W3C's voice browser working group.

Examples of text-to-speech engines that can perform at least portions of the functions of the text-to-speech engine 234 include those provided by Amazon™ Alexa, Google™ Home, Yahoo™, Microsoft™ Cortana. Google also provides APIs that can be used for these purposes.

Additionally, examples of technology that can be used for notating or applying certain audio output characteristics (e.g., emotions, or other characteristics) include Amazon™ Alexa's editing functionality, and general markup languages including the W3C standards for emotion markup language and Speech Synthesis Markup Language.

When the media content selection 237 changes from one type to another type, it may be appropriate for the voice assistant 112 to transition from one set of audio output characteristics to another, so that the audio output characteristics remain appropriate for the different context. In some embodiments, the audio output characteristics are adjusted as soon as different media content 237 is selected, such that the contextual audio output adjuster 114 generates the updated contextually-adjusted characteristics of audio output 269 based on the selected media content 237. In another possible embodiment, the audio output characteristics are adjusted gradually. For example, in some embodiments the contextual audio output adjuster 114 determines the contextually-adjusted characteristics 269 of audio output based on both the newly selected media content 237 and the previously selected media content (such as based on an average, or by percentage contributions over a period of time to gradually transition from a first set of audio output characteristics associated with the previously selected media content to a second set of audio output characteristics associated with the newly selected media content). Further, in some embodiments the audio output characteristics can be based on a plurality of media content 237 selections, such as the past 3, 5, 10, 20, 25, 30, 40, 50, or more media content selections. The characteristics of the plurality of media content 237 selections can be combined (such as by averaging), and those combined characteristics used by the contextual audio output adjuster 114 to generate the contextually-adjusted characteristics of audio output 269.

FIG. 4 is a schematic block diagram illustrating an example of the contextual audio output adjuster 114 of the voice assistant shown in FIG. 3. In this example, the contextual audio output adjuster 114 includes user-specific audio output characteristics 260, brand audio output characteristics 262, a media content analysis engine 264, and a mood generator 266 including a characteristics of audio output selection engine 268 that generates a selected contextual characteristics of audio output 269, an audio cue selection engine 270 that generates a selected audio cue 271, and a visual representation selection engine 272 that generates a selected visual representation 273. Also shown in FIG. 4 are examples of the user database 280 including a user settings 282, a user listening history 284, and a user music profile 286; the media content selection 237; and the media content database 290 including media content items 186 and media content metadata 188.

In some embodiments, the contextual audio output adjuster 114 operates to generate a contextually-adjusted audio output 269 based at least in part on base characteristics of audio output and media content characteristics.

Base characteristics of audio output are an initial set of characteristics from which adjustments are made based upon the context. An example of base characteristics of audio output are brand characteristics of audio output 262. Brand audio output characteristics can be default characteristics for a virtual assistant, such as developed for a particular company. The brand audio output characteristics have predetermined speech characteristics that are selected as a good representative for the company. The speech characteristics include various factors including the particular vocabulary used by the virtual assistant, and the way of speaking, such as the pitch, tempo, accent, humor, linguistic style, and verbosity of the virtual assistant.

Another example of base characteristics of audio output are user-specific audio output characteristics. In some embodiments, user-specific audio output characteristics for the virtual assistant are selected for a specific user. In some embodiments the user-specific audio output characteristics are custom generated for the user, and in other embodiments the user-specific audio output characteristics are based at least in part on the brand audio output characteristics, and includes audio output adjustments (e.g., language and speech adjustments) that are selected for the particular user.

In some embodiments the user-selected characteristics of audio output are adjusted by using a user database 280 that stores information associated with the user, such as the user settings 282, user listening history 284, and user music profile 286. User settings can include one or more of, for example, a language selection (e.g., English, Swedish, German, French, Spanish), a voice assistant gender selection (e.g., a selection of a male or female voice), and a mood selection. Other voice characteristics can also be selected by a user in some embodiments, such as the verbosity level, sarcasm level, humor level, or other characteristics. The user-selected characteristics of audio output can be a default set of characteristics to be used by the voice assistant 112 for a specific user.

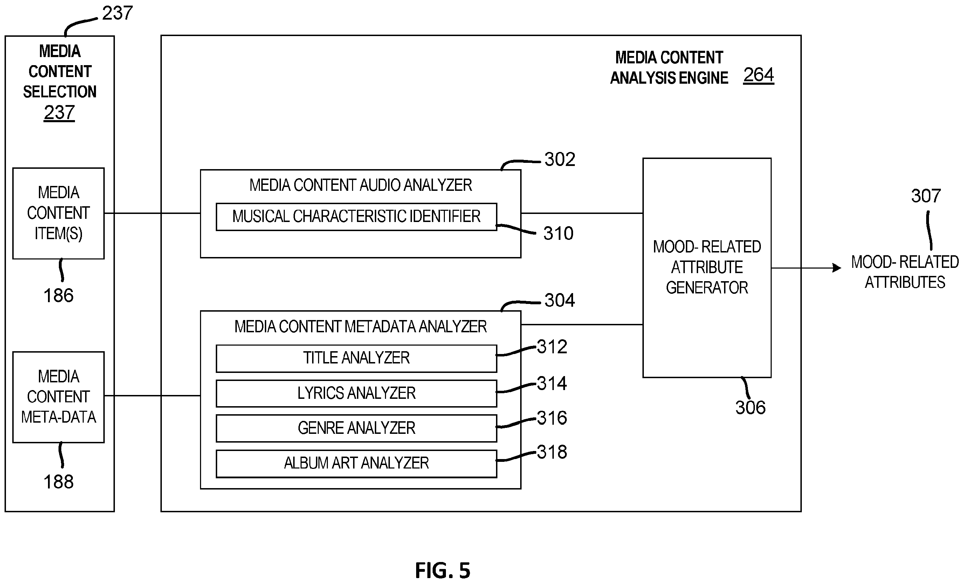

The media content analysis engine 264 operates to analyze the media content selection 237 to identify media content characteristics associated with the media content. The media content characteristics can be used by the contextual audio output adjuster 114 to determine a context in which the voice assistant 112 is operating, so that it can adjust the characteristics of audio output of the voice assistant 112 to be appropriate to the context. In some embodiments the media content analysis engine 264 utilizes data from the media content database 290, such as to analyze the musical characteristics of the media content items 186 and to analyze the media content metadata 188. An example of the media content database 290 is the media data store 182, shown in FIG. 2. In some embodiments, the media content analysis engine 264 analyzes characteristics of the media content selection 237 and determines mood-related attributes based on those characteristics. The mood-related attributes define the context in which the voice assistant 112 is operating. An example of the media content analysis engine 264 is illustrated and described in further detail with reference to FIG. 5.

The mood generator 266 operates to analyze a context in which the voice assistant is operating, and to determine an appropriate mood for the context. In some embodiments the mood includes characteristics of the audio output of the voice assistant 112. In some embodiments the mood generator includes a characteristics of audio output selection engine 268 that selects a contextually-adjusted audio output for the voice assistant 112.

The characteristics of audio output selection engine 268 determines the characteristics of the audio output of the voice assistant 112 that are appropriate for the context. In some embodiments the context is determined based at least in part upon a media content selection 237, such as based on characteristics of the media content selection 237. As discussed with reference to FIG. 5, in some embodiments the characteristics include one or more of musical characteristics and metadata-based characteristics. The characteristics are identified by the characteristics of audio output selection engine 268 to determine the context in which the voice assistant 112 is operating.

Once the context is determined, the characteristics of audio output selection engine then identifies characteristics that match or are otherwise appropriate for the context. In some embodiments, the characteristics are selected based upon the characteristics of the media content selection, such as based upon a mood of the musical characteristics (e.g., fast or slow tempo, major or minor key, instrument types, vocals or instrumental, etc.). The characteristics of audio output selection engine 268 then determines adjustments to be made to the characteristics of the audio output based on the characteristics. For example, the tempo can be increased or decreased, the pitch can be increased or decreased, the emotional expression can be adjusted to happier or sadder, etc.

In some embodiments, the characteristics of audio output selection engine 268 generates the contextually-adjusted audio output 269 based upon the brand audio output characteristics 262, or other default audio output characteristics. The brand audio output characteristics are an example of a default set of audio output characteristics. The brand audio output characteristics 262 can be a single set of audio output characteristics, or a selected one of a plurality of available brand audio output characteristics (such as selected by the user). The brand audio output characteristics have a default set of audio output characteristics. In some embodiments the characteristics of audio output selection engine determines a set of adjustments to be made from the default brand audio output characteristics.

In some embodiments, the characteristics of audio output selection engine 268 generates the contextually-adjusted audio output 269 based upon the user-specific audio output characteristics 260. The user-specific audio output characteristics 260 are characteristics that are customized for the particular user. In some embodiments the user-specific audio output characteristics is based on the brand audio output characteristics 262, but includes a set of user-specific audio output characteristic adjustments from the brand audio output characteristics 262 that results in the customized audio output characteristics. In some embodiments the user-specific audio output characteristics 260 are determined based on user preferences defined by a user. In another possible embodiment the user-specific audio output characteristics 260 are determined at least in part upon the user's musical taste profile, such as the listening history of the user. For example, the user's musical taste profile can be analyzed to determine characteristics associated with it, and to determine adjustments to the brand audio output characteristics 262 based on those characteristics. As another example, the user's listening history can be used to identify a set of media content items that have been listened to by the user. That set of media content items can then be analyzed by the media content analysis engine 264 to determine media content characteristics associated with the media content, and to make user-specific adjustments to the brand audio output characteristics 262.

In some embodiments, the mood includes other aspects, such as an audio cue and a visual representation, and in such embodiments the mood generator 266 includes an audio cue selection engine 270 that determines an audio cue 271, and a visual representation selection engine 272 that determines a visual representation 273.

Audio cues can be used by the voice assistant 112 (or the media-playback engine 110) to interact with the user by playing sounds without using a synthesized voice. Audio cues can be used, for example, to confirm receipt of an input from a user, to confirm that an action has been taken, to identify a transition between media content, and the like. Audio cues can be perceived by humans as conveying certain emotions or as conveying a feeling or mood, and as a result, audio cues can be appropriate for certain contexts and inappropriate for other contexts. Accordingly, once the context has been determined by the mood generator 266, one or more appropriate audio cues can be selected for the context.

Similarly, visual representations displayed on a display device or emitted by light sources can similarly be perceived by humans as conveying certain emotions or as conveying feelings or moods. For example, red colors are often associated with emotions such as anger or passion, blue is often associated with calm or sadness, yellow is often associated with brightness or happiness, etc. Therefore, once the context has been determined by the mood generator 266, one or more appropriate visual representations can be selected for the context.

In some embodiments the mood generator (or any one or more of the characteristics of audio output selection engine 268, audio cue selection engine 270, and visual representation selection engine 272) can be implemented using a machine learning model, such as a neural network. The machine learning model operates in a training stage and in a prediction stage.

Training data can be generated by one or more humans. For example, the humans can be asked to analyze certain aspects of media content, and the answers recorded. As one example, the humans can be asked to listen to media content, and to select one of a plurality of moods (or emotions) associated with the media content. Alternatively, the humans can be asked to score the songs on various mood-related scales (e.g., happy/sad). The training data is then used to train a machine learning model during the training stage.

Once trained on the training data, the machine learning model can then be used to predict the answers based on different media content. The predicted answers allow the characteristics of audio output selection engine to characterize the context of the selected media content 237. The results can then be used to select audio output adjustments to be made to adjust the voice assistant 112 audio output characteristics so that they are appropriate for the context.

FIG. 5 is a schematic block diagram illustrating another example of the media content analysis engine 264, shown in FIG. 4. In this example, the media content analysis engine 264 includes a media content audio analysis engine 302, a media content metadata analyzer 304, and a mood-related attribute generator 306 that generates mood-related attributes 307. The example media content analysis engine 264 includes a musical characteristic identifier 310. The example media content metadata analyzer 304 includes a title analyzer 312, a lyrics analyzer 314, a genre analyzer 316, and an album art analyzer 318. Also shown is the media content selection 237, including the one or more media content items 186 and media content metadata 188.

The media content analysis engine 264 operates to analyze the media content selection 237 and to generate mood-related attributes 307 associated with the media content selection 237. Thus, in some embodiments, the generating of the contextually-adjusted audio output characteristics 269 comprises generating mood-related attributes 307 that are compatible with the musical characteristics 310 and/or with the metadata-based characteristics 312, 314, 316 and/or 318 of the media content 186.

The media content selection 237 can include one or more media content items 186, such as a song, a playlist, or a plurality of songs or playlists, which can be analyzed individually or collectively by the media content analysis engine 264. In some embodiments, the media content analysis engine 264 utilizes one or more of the audio content of the media content items 186 and the media content metadata 188.

In some embodiments, the media content analysis engine 264 includes a media content audio analysis engine 302, and a media content metadata analyzer 304.

The media content audio analysis engine 302 operates to analyze the audio content of the one or more media content items 186 to identify musical characteristics of the media content items 186. In this example, the media content audio analyzer includes the musical characteristic identifier 310 that identifies the musical characteristics. Various possible aspects of the audio can be analyzed to identify the musical characteristics. For example, the key of the media content (e.g., major or minor), the tempo (e.g., fast or slow), the presence or absence of lyrics (e.g., the verbosity of the lyrics), and the like can be analyzed to identify the musical characteristics.

The media content metadata analyzer 304 operates to analyze metadata of the media content items 186 to identify metadata based characteristics of the media content selection 237. The example shown in FIG. 5 illustrates several exemplary analyzers including the title analyzer 312, the lyrics analyzer 314, the genre analyzer 316, and the album art analyzer 318.

The title analyzer 312 retrieves one or more titles of the media content items from the media content metadata 188 and analyzes the content of the title. Similarly, the lyrics analyzer 314 retrieves the lyrics of the media content items, and analyzes the content of the lyrics. In some embodiments, mood-related keywords are identified, such as words describing emotions (happy, sad, angry, hate, etc.). Phrases and themes can be analyzed and identified. Other aspects such as verbosity, crassness, and the like can be similarly analyzed.

The genre analyzer 316 identifies a genre or sub-genre of the media content selection 237 from the media content metadata 188.

The album art analyzer 318 analyzes album art images associated with the media content items 237. Various possible aspects of album art can be analyzed, including color schemes, text, and graphics. Certain colors can be associated with certain emotions, as discussed herein. Text can be analyzed for keywords and themes. Graphics can be similarly analyzed for correlations to moods or categories. For example, images of sunshine, rainbows, and people smiling (such as using facial analysis) with bright colors can be associated with happiness and brightness, whereas skulls, weapons and dark colors can be associated with sad, somber, angry, or dark emotions.

The results of one or more of the media content audio analysis and the media content metadata analysis are then provided to the mood-related attribute generator 306, which analyzes the results and identifies mood-related attributes 307 that are compatible with one or more of the musical characteristics of the media content and the media content metadata. The mood-related attributes 307 are then provided to the mood generator 266, which uses the mood-related attributes to identify the context in which the voice assistant 112 is operating.

In some embodiments the mood-related attribute generator 306 includes a machine learning model, which operates similar to machine learning models described herein. For example, humans can be used to analyze audio and/or metadata of media content items and to identify certain mood-related attributes. The data is then provided to a machine learning model that then learns to predict the mood-related attributes 307 based on the characteristics of the media content item audio and/or metadata.

FIG. 6 is a schematic block diagram illustrating an example of the voice action library 236 of the example content selector 230 of the example voice assistant 112, shown in FIG. 3. The voice action library 236 contains data that defines voice outputs for the voice assistant 112 based upon certain event signals 229.

In this example, the voice action library 236 includes one or more data records that define certain actions that the voice assistant 112 can take in response to events occurring at the media-playback engine 110 (FIG. 1). In this example, the data record is a lookup table 330 including an action column 332, a voice content column 334, and an event signal column 336. The lookup table 330 is provided as just one possible example of a suitable data record, and many other possible database or data storage formats can also be used (e.g., lists, inverted indexes, relational database, linked lists, graph database, etc.).

The action column 332 identifies an action that can be taken by the voice assistant 112, responsive to one or more event signals 229. In some embodiments there may be multiple possible actions that can be taken in response to an event signal 229, and there may be multiple event signals 229 that can trigger an action. Examples of several possible actions shown in FIG. 6 include: announce new song selection, announce new playlist selection, transition to next song in playlist, and skip song in playlist. Many other actions are also possible.

The voice content column 334 identifies voice content 231 for the voice assistant 112. The voice content 231 identifies the content of information to be conveyed by the voice assistant 112. However, as discussed herein, the voice content 231 is not necessarily the same as the actual words that will ultimately be output by the voice assistant 112. As shown in FIG. 3, the voice content 231 is provided to the natural language generator 232, which determines the words 233 to be spoken based on the voice content. Examples of possible voice content 231 of the voice content column 334 (corresponding to the actions in the action column 332) shown in FIG. 6 include: "now playing [song]," "now playing [playlist] playlist," "the next song is [song]," and "skipping ... the next song is [song]."

The event signal column 336 identifies event signals 229 that are associated with the corresponding actions in the action column 332 and voice content 231 in the voice content column 334. The event signals 229 identify events that occur with the media-playback engine 110 that can result in the voice assistant 112 taking some action. The content selector 230 (FIG. 3) receives the event signals 229 and uses the voice action library 236 to determine whether and what action to take as a result. Examples of possible event signals 229 of the event signal column 336 shown in FIG. 6 include song selection, playlist selection, end of song in playlist, and skip within playlist. Other event signals can also be used to trigger other actions.

FIG. 7 is a schematic block diagram of an example library of words and phrases 238, such as can be used by the natural language generator 232, shown in FIG. 3. The library of words and phrases 238 contains data that defines the set of possible words 333 that can be selected by the natural language generator 232 to convey voice content 231 (FIG. 3).

In this example, the library of words and phrases 238 includes one or more data records that define the set of possible words 233 that can be spoken by the voice assistant 112 to convey voice content 231. In this example, the data records include a plurality of tables (e.g., tables 360, 362, 364, and 366). The tables include phrases 370 and phrase characteristics 372.

In this example, each table 360, 362, 364, and 366 is associated with a particular voice content, and identifies the various possible phrases 370 that the natural language generator 232 can select from to convey the voice content 231.

For example, the table 360 is associated with the "next song is [song]" voice content 231 (e.g., associated with the action: transition to next song in playlist, shown in FIG. 6). The table 360 includes a list of the possible phrases 370 that can be used by the voice assistant 112 to convey the voice content 231. Each of the phrases 370 is associated with a set of phrase characteristics 372 that the natural language generator can use to select between the phrases 370.

The phrase characteristics 372 identify characteristics of each phrase, and in some embodiments the characteristics correspond to characteristics of the contextually-adjusted audio output selected by the contextual audio output adjuster 114 (FIG. 3), and can also correspond to the characteristics identified by the language adjustments 239 provided by the contextual audio output adjuster 114. For example, each phrase 370 is associated with scores that define the phrase characteristics 372. In the example shown in FIG. 7, each phrase is associated with phrase characteristics 327 including a verbosity score, a happiness score, and a crassness score. Many other phrase characteristics can be used in other embodiments. The scores indicate a relative extent to which the phrase has the respective phrase characteristic, such as on a scale from 0 to 1. For example, the phrase "next is" is quite short, and therefore it has a low verbosity score of 0.1, whereas the phrase "turning now to our next musical selection" contains more words, and therefore has a greater verbosity score of 0.45.

The natural language generator compares the phrase characteristics 372 with the audio output characteristics (language adjustments 239) of the contextually-adjusted audio output 269, and selects the phrase that has phrase characteristics 372 that best match the audio output characteristics. In some embodiments, the selection can include one or more additional considerations, such as by weighting some characteristics greater than other characteristics, duplication avoidance, and other factors.

Although the example library of words and phrases 238 is illustrated with data records in the form of tables, many other possible database or data storage formats can also be used (e.g., lists, inverted indexes, relational database, linked lists, graph database, etc.).

The various embodiments described above are provided by way of illustration only and should not be construed to limit the claims attached hereto. Those skilled in the art will readily recognize various modifications and changes that may be made without following the example embodiments and applications illustrated and described herein, and without departing from the full scope of the following claims.

## Claims

1. A method for generating synthesized speech of a voice assistant (112) having a contextually-adjusted audio output (235) using a voice-enabled device (102), the method comprising:
identifying media content characteristics (264) associated with media content (186);
identifying base characteristics (262) of audio output (235);
generating contextually-adjusted characteristics (269) of audio output (235) based at least in part on the base characteristics (262) and the media content characteristics (264); and
using the contextually-adjusted audio output characteristics (269) to generate the synthesized speech.

2. The method of claim 1, wherein the contextually-adjusted characteristics (269) of audio output (235) are further based on user-specific adjustments (260) to the base characteristics (262) of audio output.

3. The method of claim 2, wherein the user-specific adjustments (260) are based on listening history (284) of the user (U).

4. The method of any preceding claim, wherein using the contextually-adjusted audio output characteristics (269) comprises receiving voice content (231) and generating the synthesized speech to convey the voice content to the user (U) according to the contextually-adjusted audio output characteristics.

5. The method of any preceding claim, wherein identifying the media content characteristics (307) comprises:
analyzing audio of the media content (186) to determine musical characteristics (310) of the media content; and
analyzing media content metadata (188) to determine metadata-based characteristics (312, 314, 316, 318).

6. The method of claim 5, wherein generating the contextually-adjusted audio output characteristics (269) is based at least in part upon the musical characteristics (310) of the media content (186).

7. The method of any preceding claim, wherein using the contextually-adjusted audio output characteristics (269) to generate the synthesize speech further comprises:
selecting words (233) to be spoken by the voice assistant (112) using a natural language generator (232) based upon language adjustments (239) associated with the contextually-adjusted audio output characteristics (269); and
determining a pronunciation (240) and/or an emotion (242) for speaking the words based upon speech adjustments (241) associated with the contextually-adjusted audio output characteristics (269).

8. The method of any preceding claim, further comprising generating a mood associated with the contextually-adjusted audio output characteristics (269), the mood comprising:
the contextually-adjusted audio output characteristics (269);
one or more audio cues (271); and
one or more visual representations (273).

9. A computer program product (164) comprising computer-executable components for causing a voice assistant system (101) to perform the method of any preceding claim when the computer-executable components are run on a processing device (162) comprised in the voice assistant system.

10. A voice assistant system (101) comprising:
at least one processing device (162; 173); and
at least one computer readable storage device (164; 174) storing data instructions that, when executed by the at least one processing device, cause the at least one processing device to:
identify media content characteristics (264) associated with media content (186);
identify base characteristics (262) of audio output (235);
generate contextually-adjusted audio output characteristics (269) based at least in part on the base characteristics of audio output and the media content characteristics; and
use the contextually-adjusted audio output characteristics to generate synthesized speech.

11. The voice assistant system of claim 10, further comprising a voice-enabled device (102) configured for interaction with a user (U) via voice, wherein the voice-enabled device comprises the at least one processing device (162) and the at least one computer readable storage device (164).

12. The voice assistant system of any claim 10-11, further comprising a media delivery system (104) comprising at least one server computing device (146) comprising the at least one processing device (173) and the at least one computer readable storage device (174).

13. The voice assistant system of any claim 10-12, wherein the base characteristics of audio output (235) are user-specific characteristics (260) of audio output generated based at least in part on a listening history (284) of a user (U) and brand characteristics (262) of audio output.

14. The voice assistant system of any claim 10-13, wherein the identifying of the media content characteristics (264) associated with media content (186) further comprises:
analyzing audio content of the media content to identify musical characteristics (310) of the media content; and
analyzing media content metadata (188) of the media content to identify metadata based characteristics of the media content (312, 314, 316, 318);
wherein the media content characteristics (264) used to generate the contextually-adjusted audio output characteristics (269) optionally comprise:
the musical characteristics (310) of the media content; and/or
the metadata characteristics (312, 314, 316, 318) of the media content.

15. The voice assistant system of any claim 10-14, wherein generating the contextually-adjusted audio output characteristics (269) is performed by a contextual audio output adjuster (114), wherein the contextual audio output adjuster comprises data instructions that cause the at least one processing device (162; 173) to:
generate language adjustments (239) based on the contextually-adjusted audio output characteristics (269);
send the language adjustments to a natural language generator (232) to select words (233) to be spoken by the voice assistant (112);
generate speech adjustments (241) based on the contextually-adjusted audio output characteristics (269); and
send the speech adjustments to a text-to-speech engine (234), the speech adjustments defining pronunciation adjustments (240) and/or emotion adjustments (242) to be applied to the words when spoken by the voice assistant.
